# EUROPÄISCHE PATENTSCHRIFT

(11) **EP 3 488 919 B1**
(45) Veröffentlichungstag und Bekanntmachung des Hinweises auf die Patenterteilung: **04.03.2026**
(21) Anmeldenummer: 17204202.0
(22) Anmeldetag: 28.11.2017
(51) Int. Cl.: C04B 28/04

(54) **VERFAHREN UND VORRICHTUNG ZUM HERSTELLEN EINER DRAINAGEFÄHIGEN MÖRTEL-FÜLLUNG EINES HOHLRAUMS**
METHOD AND DEVICE FOR PRODUCING A DRAINAGE-CAPABLE MORTAR FILLING OF A CAVITY
PROCÉDÉ ET DISPOSITIF DE FABRICATION D'UN MORTIER DE REMPLISSAGE DRAINANT D'UNE CAVITÉ

(43) Veröffentlichungstag der Anmeldung: 29.05.2019
(73) Patentinhaber: MC-Bauchemie Müller GmbH & Co. KG Chemische Fabriken, 46238 Bottrop (DE); Studiengesellschaft für Tunnel und Verkehrsanlagen - STUVA - e.V., 50827 Köln (DE); IMM Maidl & Maidl Beratende Ingenieure GmbH & Co. KG, 44801 Bochum (DE); Porr Bau GmbH, 1100 Wien (AT)
(72) Erfinder: KLEEN, Eugen, 46514 Schermbeck (DE); THIENERT, Christian, 40699 Erkrath (DE); LEISMANN, Frank, 52224 Stolberg (DE); EDELHOFF, Dennis, 58640 Iserlohn (DE); VALENTINI, Heiko, 45277 Essen (DE); HÖRLEIN, Norbert, 1220 Wien (AT)
(74) Vertreter: Zenz Patentanwälte Partnerschaft mbB

(56) Entgegenhaltungen:
- EP-A1- 3 048 087
- WO-A1-93/02783
- DE-A1- 102010 062 762
- DE-B3- 102009 008 451

## Beschreibung

Die Erfindung betrifft ein Verfahren zum Herstellen einer drainagefähigen Mörtel-Füllung eines Hohlraums, insbesondere eines Ringspalts zwischen einem Baugrund und Tübbingen eines Tunnelbauwerks.

Ein Verfahren zum Verfüllen eines Ringraums zwischen der Außenfläche eines Tübbingrings und einem ihm umgebenden Baugrund eines Tunnelbauwerks durch Einbringen eines Baustoffgemischs ist aus der EP 3 048 243 A1 bekannt. Eine über eine Leitung herangeführte dünnflüssige Grundkomponente des Baustoffgemischs wird am Ort der Einbringung in den Ringraum mit einer Aktivatorkomponente vermischt. Die nur feinkörnige Partikel enthaltende Grundkomponente enthält entweder ein Bentonit-Zement-Gemisch oder ein Gemisch von Bentonit mit gemahlenem Hüttensand oder auch eine Kombination von beidem sowie Wasser und kann weitere Füll- und/oder Zusatzstoffe enthalten. Die Grundkomponente bindet entweder überhaupt nicht selbstständig ab oder weist eine auf mehr als 24 Stunden verzögerte Abbindezeit auf. Die vorgeschlagene Aktivatorkomponente enthält vorzugsweise Wasserglas, kann aber auch ein Erdalkalioxid oder -hydroxid oder ein Aluminat enthalten. Zusätzlich wird eine Tensidkomponente der herantransportierten Grundkomponente zugemischt. Das Gemisch aus Grundkomponente, Aktivatorkomponente und Tensidkomponente wird durch eine als Begasungsstrecke ausgebildete rohrförmige Strömungskammer eines Schaumgenerators mit vorzugsweise zylindrischem Querschnitt geführt. Die Außenwand der Strömungskammer ist durch ein poröses Material gebildet und umgeben von einer Druckkammer, welcher Druckluft eines vorgegebenen Drucks zugeführt wird. Der Druck ist so eingestellt, dass eine vorgegebene Menge pro Zeiteinheit durch die poröse Wandung in die Strömungskammer eindringt und dort Luftbläschen vorgegebener Größe und Verteilung bildet. Das in der Druckschrift beschriebene Verfahren basiert auf dem Gedanken, dem zum Verfüllen des Ringraums verwendeten Baustoffgemisch Luft zuzumischen, das heißt einen Baustoffschaum einzubringen, um eine hohe Kompressibilität zu erreichen. Dabei soll die Luft erst am Ort des Einbringens in den Ringspalt zugemischt werden, um die Heranführung zu verbessern, da eine schaumfreie Grundkomponente besser über längere Strecken pumpbar ist.

Aus der WO 2016/179612 A1 ist ein Verfahren zum Herstellen eines wasserdurchlässigen Ringspaltmörtels bekannt, bei dem zunächst ein aufgeschäumtes Mörtelzwischenprodukt gebildet wird, wobei das Mörtelzwischenprodukt Zuschlagstoffe, Wasser und Bindemittel umfasst, wobei die Zuschlagstoffe eine Zuschlagstoffkörnung mit einem Hohlraumgehalt zwischen 30% und 50% aufweisen, wobei die Zuschlagstoffkörnung, das Wasser und das Bindemittel zusammen einen Hohlraumgehalt von 10% bis 25% aufweisen, dann das aufgeschäumte Mörtelzwischenprodukt durch eine Förderleitung in einen Ringspalt gefördert wird und unmittelbar nach dem Verlassen der Förderleitung einen Luftporengehalt aufweist, welcher absolut um 10% bis 25% größer ist als der Hohlraumgehalt der Zuschlagstoffkörnung, des Wassers und des Bindemittels zusammen, dann im Bereich des Endes der Förderleitung aus dem Mörtelzwischenprodukt durch Beimischung eines Entschäumers ein Frischmörtel gebildet wird und schließlich der Schaum durch den Entschäumer vor dem Erhärten des Frischmörtels zu dem Ringspaltmörtel zumindest teilweise zerstört wird.

Bei dem bekannten Verfahren zum Herstellen eines wasserdurchlässigen Ringspaltmörtels wird die Wasserdurchlässigkeit oder Drainagefähigkeit durch die Eigenschaften der Zuschlagstoffe, insbesondere den Hohlraumgehalt zwischen den Körnern der Zuschlagstoffe, erzielt. Eine gute Wasserdurchlässigkeit wird durch hohe Hohlraumgehalte zwischen den Zuschlagkörnern aufgrund geeigneter Wahl der Korngrößen und Kornformen erreicht.

Die DE 10 2009 008451 B3 beschreibt einen wasserdurchlässigen Mörtel zur Ringraumverfüllung, der unter anderem eine gute Pumpbarkeit aufweist und ausreichende Festigkeit garantiert. Die vorgeschlagene Mörtelmischung besteht aus 10 - 25 Masse-% eines Zements als hydraulisches Bindemittel, 25 - 40 Masse-% Wasser, 40 - 60 Masse-% eines amorphen Granulats, vorzugsweise eines kugelförmigen Blähglasgranulats, als Zuschlagstoff, 0,5 - 5 Masse-% mindestens eines Stoffes auf der Basis synthetischer Tenside als Luft- und/oder Schaumbildner sowie 0,05 - 2 Masse-% eines Wirkstoffs auf Basis eines Polyethylenoxids in Kombination mit einem Celluloseether als Stabilisator zur Erreichung einer erhöhten Viskosität. Welche Luftanteile auf welche Weise in den Mörtel eingebracht werden, offenbart die Druckschrift nicht.

Aus der WO 93/02783 ist ein Schaumgenerator mit einer eine poröse Wandung aufweisenden rohrförmigen Begasungsstrecke bekannt. Ein aufzuschäumendes Medium, beispielsweise ein Mörtel, wird durch den Innenraum der rohrförmigen Begasungsstrecke hindurchgeleitet, wobei Druckluft aus einer Druckluftkammer durch die poröse Wandung der Begasungsstrecke hindurch in den Innenraum gepresst wird.

Aus der DE 10 2010 062762 A1 ist ein Verfahren zum Herstellen eines Schaumbetons bekannt, bei dem zunächst ein Zementleim und ein Schaum gebildet werden und dann der Zementleim mit dem Schaum gemischt und der so gebildete Schaumbeton getrocknet wird. Das Bilden des Schaums mit einer Dichte von 10 - 160 g/l, vorzugsweise 80 g/l, aus Wasser, Schaummittel und Luft erfolgt mit Hilfe eines Schaumgenerators. Das Mischen des so gebildeten Schaums mit dem Zementleim erfolgt in einem Fahrmischer.

Ausgehend von diesem Stand der Technik ist es Aufgabe der Erfindung, eine Möglichkeit zum Herstellen einer drainagefähigen Mörtel-Füllung eines Ringspalts zu schaffen, die eine gute Pumpfähigkeit der heranzuführenden Komponenten mit hoher Wasserdurchlässigkeit und Festigkeit der Ringspaltfüllung im erhärteten Zustand kombiniert.

Diese Aufgabe wird erfindungsgemäß durch ein Verfahren zum Herstellen einer drainagefähigen Mörtel-Füllung eines Hohlraums, insbesondere eines Ringspalts zwischen einem Baugrund und Tübbingen eines Tunnelbauwerks, mit den Merkmalen des Anspruchs 1 gelöst. Bei diesem Verfahren wird zunächst im Schritt a) eine Zementsuspension mit einem Wasser-Bindemittel-Wert zwischen 0,40 und 0,60 durch Mischen wenigstens eines Zement-Bindemittels mit Wasser und gegebenenfalls Zuschlägen hergestellt und ein Zementsuspension-Volumenstrom erzeugt, wobei der Zementsuspension oder dem Zementsuspension-Volumenstrom ein Tensid zugemischt wird. Dann wird im Schritt b) der Zementsuspension-Volumenstrom derart durch einen Schaumgenerator zur Bildung eines Schaum-Volumenstroms geleitet, dass Druckluft in einem ersten vorgegebenen Volumenanteil zwischen 150 % und 250 % des Zementsuspension-Volumenstroms und bei einer Luftporengrößenverteilung mit einer geringen Streuung der Luftporengrößen, bei der die Luftporengrößen von mindestens 70 % des Druckluft-Volumenanteils von einer mittleren Luftporengröße um nicht mehr als etwa 50 % abweichen, zugemischt wird. Im Schritt c) wird dem Schaum-Volumenstrom bei seiner Einbringung in den Hohlraum ein Erstarrungsbeschleuniger zugemischt. Der Erstarrungsbeschleuniger ist vorzugsweise ein Spritzbetonbeschleuniger. "Druckluft" soll hier jegliche Luft oder ähnliche Gasgemische oder Gase, wie beispielsweise Stickstoff, bezeichnen, die in die Zementmischung "gedrückt" werden, um Schaumblasen oder -poren zu erzeugen, ungeachtet des dabei aufgewendeten Drucks und der genauen Zusammensetzung des Gasgemischs.

Die Erfindung basiert auf dem Grundgedanken, die Wasserdurchlässigkeit nicht - wie bei dem bekannten Verfahren - durch hohe Hohlraumgehalte zwischen Zuschlagkörnern, sondern durch Herstellen eines überwiegend offenporig erstarrten Schaums zu erzielen. Dies wird erfindungsgemäß durch die Einbringung eines bestimmten Luftporenanteils bei einer möglichst homogenen Luftporenverteilung erreicht. Diese Vorgehensweise basiert auf der Erkenntnis, dass einerseits bei einer zu geringen Lufteinbringung, bei der der gebildete Schaum eine hohe Dichte aufweist, ein zu hoher Anteil der Luftporen in der Zementsuspension derart eingebettet wird (insbesondere in Form eines Kugelschaums mit kugelförmigen Luftbläschen bis hin zu einem Polyederschaum, bei dem aneinander liegende verformte Luftbläschen durch im Wesentlichen ebenflächige Flüssigkeitswände getrennt sind), dass er beim Abbinden zu geschlossenen Poren, **d.h.** zu einem geschlossenzelligen Schaum erstarrt. Andererseits führt ein zu hoher Luftporenanteil, bei der der gebildete Schaum eine geringe Dichte aufweist, dazu, dass der Schaum kollabiert. Anzustreben ist aber ein Schaum, bei dem die Dichte und Verteilung der Luftporen bereits zu einem Abfließen der Flüssigkeit (Zementsuspension mit Tensid) aus den zwischen sich berührenden Luftbläschen befindlichen Lamellen und deren Aufreißen und einem Einsetzen eines Verbindens der Luftbläschen (Koaleszenz) geführt hat, aber die Schaumstege und Schaumknotenpunkte zwischen den Luftporen noch zu einem großen Teil erhalten sind. In diesem anzustrebenden metastabilen Zustand, in dem für kurze Zeit ein zum großen Teil offenporiger Schaum existiert, soll der Schaum durch einsetzende Erstarrung stabilisiert ("eingefroren") werden und danach vollständig aushärten. Es zeigte sich, dass bei Einbringung eines Luftporen-Volumenanteils zwischen 150 % und 250 %, vorzugsweise etwa 200 %, bezogen auf das Zementsuspension-Volumen, und bei einer Luftporengrößenverteilung mit einer geringen Streuung der Luftporengrößen ein solcher gewünschter offenporiger Schaum entsteht. Eine ausreichend geringe Streuung liegt erfindungsgemäß vor, wenn die Luftporengrößen von mindestens 70 % des Druckluft-Volumenanteils von einer mittleren Luftporengröße um nicht mehr als etwa 50 % abweichen. Vorzugsweise sollten die Luftporengrößen von mindestens 85 % des Druckluft-Volumenanteils von einer mittleren Luftporengröße um nicht mehr als etwa 30 % abweichen. Es wird angenommen, dass die hier anzustrebende geringe Streuung der Luftporengrößen den in Schäumen zu beobachtenden Effekt minimiert, dass große Schaumblasen auf Kosten benachbarter kleinerer Schaumblasen wachsen. Die geringere Streuung der Luftporengrößen führt zu einem gleichmäßigeren Zerfall des Schaumes und einer besseren Einstellbarkeit der optimalen Zusammensetzung (insbesondere der optimalen Luft-Zementsuspension-Relation) für den gewünschten metastabilen Schaumzustand zum Zeitpunkt des "Einfrierens" aufgrund einsetzender Erstarrung.

Die bei ausreichender Wasserdurchlässigkeit außerdem zu erzielende hohe Festigkeit des erstarrten, abgebundenen Schaummörtels von mindestens 0,4 N/mm² (im Alter von 3 Tagen) wird insbesondere durch einen Wasser-Bindemittel-Wert (Wasser-Zement-Wert) von unter 0,60 erreicht; die erforderliche Fließfähigkeit, Pumpbarkeit und Aufschäumbarkeit der Zementsuspension durch einen Wasser-Bindemittel-Wert (Wasser-Zement-Wert) von über 0,40.

Bei einer bevorzugten Ausführungsform wird im Schritt a) ein Zementsuspension-Volumenstrom mit einer Dichte zwischen 1500 kg/m³ und 2000 kg/m³, vorzugsweise zwischen 1700 kg/m³ und 1900 kg/m³, erzeugt. Im Schritt b) wird dann die Druckluft in dem ersten vorgegebenen Volumenanteil derart zugemischt, dass ein Schaum-Volumenstrom mit einer Dichte zwischen 600 kg/m³ und 800 kg/m³, vorzugsweise zwischen 650 kg/m³ und 750 kg/m³, gebildet wird. Versuche mit Zementsuspensionen in diesem Dichtebereich, vorzugsweise mit Dichten um 1800 kg/m³, haben gezeigt, dass sich eine ausreichende Wasserdurchlässigkeit in dem genannten Dichteintervall ergibt. Bei einer Zementsuspension mit einer Dichte von etwa 1800 kg/m³ und einer Luftzugabemenge von etwa 200 % ergab sich eine mit Blick auf die erzielte Wasserdurchlässigkeit optimale Schaumdichte von ca. 700 kg/m³, wobei hier zu berücksichtigen ist, dass in der Praxis nicht die gesamte dem Schaumgenerator zugeführte Druckluft auch in den Schaum eingebracht wird, d.h. ein Teil der Druckluft in die Umgebung entweicht oder zu lokalen Fehlstellen in der Ringspaltfüllung führt. Dieser Anteil der nicht in den Schaum eingebundenen Luft kann unter anderem durch eine ausreichende Tensid-Zugabe minimiert werden und ist bei dem erfindungsgemäßen Verfahren geringer als etwa 20 %.

Vorzugsweise wird im Schritt b) die Druckluft bei einer Luftporengrößenverteilung zugemischt, bei der die mittlere Luftporengröße im Bereich zwischen 200 µm und 1300 µm, vorzugsweise zwischen 250 µm und 800 µm, insbesondere zwischen 300 µm und 500 µm, liegt. Eine optimale Luftporengröße ist insbesondere mit Blick auf das Erreichen des oben genannten metastabilen Zustands zu wählen. Darüber hinaus erhöhen kleinere Luftporen die Gefahr des Zusetzens der Porenkanäle und vermindern größere Luftporen die Festigkeit.

Bei einem bevorzugten Verfahren zum Herstellen einer drainagefähigen Mörtel-Füllung eines Hohlraums wird im Schritt b) der Zementsuspension-Volumenstrom durch eine eine poröse Wandung aufweisende rohrförmige Begasungsstrecke des Schaumgenerators geleitet, wobei Druckluft aus einer Druckluftkammer durch die poröse Wandung der Begasungsstrecke hindurch in einen den Zementsuspension-Volumenstrom führenden Innenraum gepresst wird, wobei die Porengröße der porösen Wandung so gewählt wird, dass die gewünschte Luftporengrößenverteilung im Schaum-Volumenstrom erreicht wird. Ein bevorzugte Porengröße der porösen Wandung liegt hierbei zwischen 30 µm und 100 µm, vorzugsweise zwischen 50 µm und 60 µm.

Vorzugsweise wird bei dem Verfahren zum Herstellen einer drainagefähigen Mörtel-Füllung die Zementsuspension im Schritt a) durch Mischen wenigstens eines Zements der Zementart CEM III oder CEM IV, vorzugsweise der Zementart CEM III, mit Wasser hergestellt. Bevorzugt ist ein Hüttensandzement, insbesondere ein Hüttensandzement mit einer hohen Festigkeitsklasse, mit hohem Sulfatwiderstand und niedrigem Alkalianteil. Dabei werden der Zementsuspension vorzugsweise geringe Mengen eines Tonerde-Schichtsilikats, vorzugsweise eines Bentonits, als Stabilisierer und/oder geringe Mengen eines Dispergiermittels zugemischt, wobei die geringen Mengen jeweils weniger als 2 Gew.-% der Zementsuspension betragen. Die Verwendung eines Zements, der nur geringe Anteile von Klinker bzw. Calciumverbindungen aufweist, vermeidet ein Zusetzen (oder Zuwachsen) der Poren der Ringspaltmörtelfüllung durch Versinterung bei Einwirken des zu drainierenden Wassers auf die Calciumverbindungen.

Bei einer bevorzugten Weiterbildung des Verfahrens wird im Schritt a) zunächst der Zementsuspension-Volumenstrom erzeugt und dann dem Zementsuspension-Volumenstrom das Tensid in Form einer Tensidlösung in einem zweiten vorgegebenen Volumenanteil von maximal 20 %, vorzugsweise zwischen 5 und 15 %, des Zementsuspension-Volumenstroms zugemischt. Die volumengesteuerte Zugabe des Tensids nach dem Anmischen der Zementsuspension vermeidet ein unkontrolliertes Vorschäumen der Zementsuspension. Die Menge des eingesetzten Tensids hängt von der Art und Wirksamkeit des Tensids und von wirtschaftlichen Erwägungen ab. Das eingesetzte Tensid und dessen Menge sind so zu wählen, dass mindestens 80 % der eingesetzten Luftmenge in den Schaum eingebunden werden.

Vorzugsweise wird eine wenigstens ein anionisches Tensid und/oder wenigstens einen Proteinschäumer enthaltende Tensidlösung zugemischt. Einsetzbar sind hier beispielsweise die als Schaumbildner bezeichneten Betonzusatzmittel, die anionische Tenside oder Proteinschäumer enthalten. Bevorzugt sind synthetische Tenside auf der Basis von Alkalisalzen von Alkylethersulfaten, Alkylsulfonaten und/oder Alkylbenzolsulfonaten.

Bei dem erfindungsgemäßen Verfahren zum Herstellen einer drainagefähigen Mörtel-Füllung eines Hohlraums wird vorzugsweise im Schritt c) dem Schaum-Volumenstrom ein alkali- und erdalkalifreier Erstarrungsbeschleuniger in einem dritten vorgegebenen Volumenanteil zwischen 4 % und 16 %, vorzugsweise zwischen 7 % und 10 %, des Zementsuspension-Volumenstroms zugemischt. Die Menge des zugemischten Erstarrungsbeschleunigers hängt von der Art des Beschleunigers und der Homogenität der Einmischung in den Schaum-Volumenstrom sowie von wirtschaftlichen Erwägungen ab. Die Homogenität der Einmischung in den Schaum-Volumenstrom hängt von der Art der Mischvorrichtung und von der Länge und dem Querschnitt der sich an die Mischvorrichtung anschließenden Förderleitung ab. Sofern eine Ringdüse eingesetzt wird, liegt der dritte Volumenanteil bei vorzugsweise 7 % bis 10 %. Sofern beispielsweise ein sogenannter Injektionsdeckel an Ende einer Lisene eingesetzt wird, kann aufgrund der schlechteren Materialdurchmischung eine Erhöhung des Beschleunigeranteils auf bis zu 16 % erforderlich sein. Die Art des Beschleunigers wiederum ist in Abhängigkeit vom verwendeten Zement zu wählen. Darüber hinaus ist die Art des Erstarrungsbeschleunigers auch auf das verwendete Tensid und die weiteren Komponenten des Schaums abzustimmen, um ein Zerfallen des Schaums und eine verringerte Druckfestigkeit im erstarrten Zustand zu vermeiden. Bei einer einen Zement der Zementarten CEM III oder CEM IV enthaltenden Zementsuspension wird vorzugsweise ein alkali- und erdalkalifreier Erstarrungsbeschleuniger, beispielsweise ein Aluminiumhydroxid und/oder Aluminiumsulfat enthaltender Erstarrungsbeschleuniger eingesetzt. Vorzugsweise wird im Schritt c) dem Schaum-Volumenstrom als Erstarrungsbeschleuniger eine wässrige Lösung von mindestens 50 Gew.-% Aluminiumhydroxid und/oder Aluminiumsulfat zugemischt.

Bei einer bevorzugten Ausführungsform des Verfahrens zum Herstellen einer drainagefähigen Mörtel-Füllung eines Hohlraums wird im Schritt c) der Erstarrungsbeschleuniger dem Schaum-Volumenstrom maximal 20 Sekunden, vorzugsweise maximal 15 Sekunden, vor seiner Einbringung in den Hohlraum zugemischt. Die Zeitdauer sollte nicht überschritten werden, um das Risiko eines vorzeitigen Abbindens des Schaums in der Transportleitung, insbesondere in der Lisene, zu verringern.

Die oben genannte Aufgabe der Erfindung, eine Möglichkeit zum Herstellen einer drainagefähigen Mörtel-Füllung eines Ringspalts zu schaffen, die eine gute Pumpfähigkeit der heranzuführenden Komponenten mit hoher Wasserdurchlässigkeit und Festigkeit der Ringspaltfüllung im erhärteten Zustand kombiniert, wird erfindungsgemäß auch durch eine Vorrichtung mit den Merkmalen des Anspruchs 11 gelöst.

Die erfindungsgemäße Vorrichtung zum Herstellen einer Mörtel-Füllung eines Hohlraums dient zur Durchführung des oben genannten Verfahrens und weist eine Vorrichtung zum Erzeugen eines Zementsuspension-Volumenstroms, eine Vorrichtung zum Zumischen eines Tensids zu dem Zementsuspension-Volumenstrom und einen Schaumgenerator auf. Der Schaumgenerator hat eine eine poröse Wandung aufweisende rohrförmige Begasungsstrecke, durch die der Zementsuspension-Volumenstrom hindurchgeführt wird, wobei an der Außenseite der porösen Wandung eine Druckluftkammer derart angeordnet ist, dass Druckluft aus der Druckluftkammer durch die poröse Wandung der Begasungsstrecke hindurch in den Zementsuspension-Volumenstrom gepresst wird, so dass ein Schaum-Volumenstrom erzeugt wird, wobei die poröse Wandung derart ausgebildet ist, dass die Druckluft bei einer Luftporengrößenverteilung mit einer geringen Streuung der Luftporengrößen, bei der die Luftporengrößen von mindestens 70 % des Druckluft-Volumenanteils von einer mittleren Luftporengröße um nicht mehr als etwa 50 % abweichen, dem Schaum-Volumenstrom zugemischt ist. Die Vorrichtung umfasst ferner einen mit einem Drucklufteinlass der Druckluftkammer verbundenen Volumenstrom-Regler zum Einstellen eines Druckluft-Volumenstroms, eine mit dem Volumenstrom-Regler gekoppelte Steuereinrichtung, die derart konfiguriert ist, dass ein Druckluft-Volumenstrom einstellt wird, der etwa dem 1,5-fachen bis 2,5-fachen des Zementsuspension-Volumenstroms entspricht, und eine dem Schaumgenerator nachgeschaltete Vorrichtung zum Zumischen eines Erstarrungsbeschleunigers zu dem Schaum-Volumenstrom, die mit einer Leitung zum Einbringen der in der Vorrichtung zum Zumischen des Erstarrungsbeschleunigers gebildeten Mischung in den Hohlraum verbunden ist. Insbesondere aufgrund der volumengesteuerten Zufuhr von Druckluft in einem vorgegebenen Verhältnis zum Zementsuspension-Volumen mittels des Schaumgenerators und aufgrund der Ausbildung des Schaumgenerators, der eine geringe Streuung der Luftporengrößen, **d.h.** eine hohe Luftporenhomogenität ermöglicht, gestattet die Vorrichtung eine Verfahrensführung, die zu einem wasserdurchlässigen, weil zu einem großen Teil offenporigen Schaummörtel führt.

Bei einer bevorzugten Ausführungsform weist die Vorrichtung zum Erzeugen eines Zementsuspension-Volumenstroms eine erste Pumpvorrichtung und eine mit der Steuereinrichtung gekoppelte erste Durchflussmessvorrichtung zum Erfassen des Zementsuspension-Volumenstroms auf. Dies ermöglicht einen variierenden Zementsuspension-Volumenstrom (ohne Durchflussmessvorrichtung müsste stets ein konstanter, vorgegebener Volumenstrom eingestellt werden).

Vorzugsweise weist die Vorrichtung zum Zumischen eines Tensids eine Leitung zum Weiterleiten des Zementsuspension-Volumenstroms, einen in die Leitung eingebundenen Mischer und einen stromauf des Mischers in die Leitung einmündenden Leitungszweig zum Heranführen eines Tensid-Volumenstroms auf, wobei der Leitungszweig zum Heranführen des Tensid-Volumenstroms eine zweite Pumpvorrichtung und eine zweite Durchflussmessvorrichtung zum Erfassen des Tensid-Volumenstroms aufweist, wobei die zweite Pumpvorrichtung und die zweite Durchflussmessvorrichtung mit der Steuereinrichtung gekoppelt sind. Dies ermöglicht zusätzlich eine volumengesteuerte regelbare Tensid-Zugabe.

Bei einem bevorzugten Ausführungsbeispiel des Schaumgenerators ist die rohrförmige Begasungsstrecke ein von der porösen Wandung umgebener zylindrischer Rohrabschnitt mit einem Innendurchmesser zwischen 10 mm und 20 mmm und einer Länge zwischen 100 mm und 300 **mm,** wobei die Poren der porösen Wandung einen näherungsweise gleichen Durchmesser aufweisen. Vorzugsweise liegt der Durchmesser der Poren der porösen Wandung zwischen 30 µm und 100 µm, vorzugsweise zwischen 50 µm und 60 µm.

Die erfindungsgemäße Vorrichtung ist vorzugsweise dadurch gekennzeichnet, dass die Vorrichtung zum Zumischen eines Erstarrungsbeschleunigers eine Leitung zum Weiterleiten des Schaum-Volumenstroms, einen in diese Leitung einmündenden Leitungszweig zum Heranführen eines Erstarrungsbeschleuniger-Volumenstroms aufweist, wobei der Leitungszweig zum Heranführen des Erstarrungsbeschleuniger-Volumenstroms eine dritte Pumpvorrichtung und eine dritte Durchflussmessvorrichtung aufweist, wobei die dritte Pumpvorrichtung und die dritte Durchflussmessvorrichtung mit der Steuereinrichtung gekoppelt sind. Dies ermöglicht zusätzlich eine volumengesteuerte regelbare Zuführung des Erstarrungsbeschleunigers.

Dabei weist die Vorrichtung zum Zumischen des Erstarrungsbeschleunigers vorzugsweise eine die Leitung zum Weiterleiten des Schaum-Volumenstroms umgebende Ringdüse auf, wobei der Leitungszweig zum Heranführen des Erstarrungsbeschleuniger-Volumenstroms in die Ringdüse einmündet. Die Ringdüse ermöglicht eine gute Durchmischung von Erstarrungsbeschleuniger und Zementschaum und dadurch einen reduzierten und somit wirtschaftlicheren Einsatz des Beschleunigers. Außerdem wird aufgrund der guten Durchmischung ein gleichmäßigeres Erstarren des Schaumes ermöglicht.

Eine bevorzugte Vorrichtung dient zum Herstellen einer Mörtel-Füllung eines Ringspalts zwischen einem Baugrund und Tübbingen eines Tunnelbauwerks und ist dadurch gekennzeichnet, dass die Leitung zum Einbringen der in der Mischvorrichtung gebildeten Mischung in den Hohlraum eine Lisene zum Einbringen der Mischung in den Ringspalt ist.

Vorteilhafte und/oder bevorzugte Weiterbildungen der Erfindung sind in den Unteransprüchen gekennzeichnet.

Im Folgenden wird die Erfindung anhand eines in der Zeichnung dargestellten bevorzugten Ausführungsbeispiels näher beschrieben. In der Zeichnung zeigen:
Figur 1 eine schematische Darstellung eines bevorzugten Ausführungsbeispiels der erfindungsgemäßen Vorrichtung zur Ausführung des erfindungsgemäßen Verfahrens und
Figur 2 eine schematische Querschnittansicht eines in der Vorrichtung gemäß Figur 1 verwendeten Schaumgenerators.

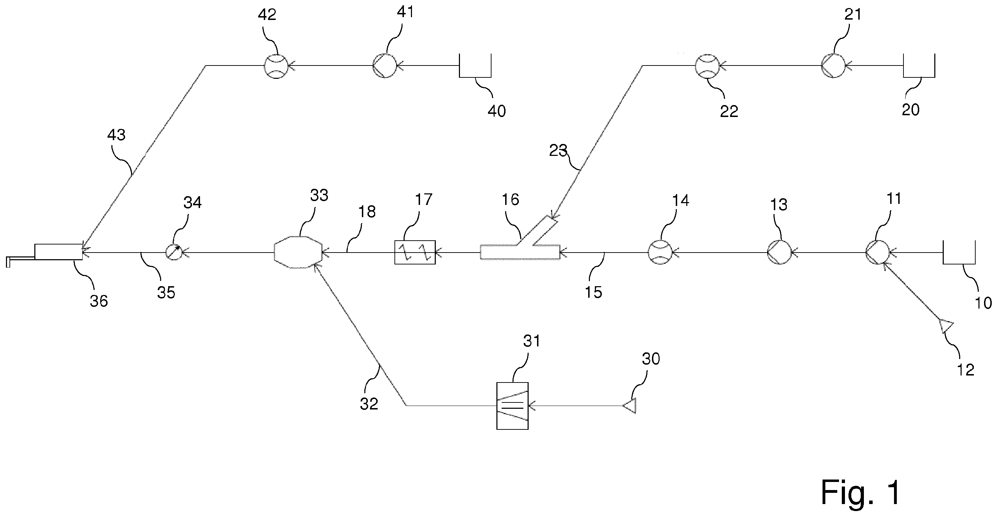

Das erfindungsgemäße Verfahren dient der Herstellung einer wasserdurchlässigen und somit drainagefähigen Mörtelfüllung eines Hohlraums, insbesondere eines Ringspalts zwischen einem Baugrund und Tübbingen eines Tunnelbauwerks. Die Herstellung des in den Ringspalt einzubringenden Drainagemörtels umfasst mehrere aufeinander abgestimmte Schritte des Herstellens und Mischens von Komponenten, die anhand der in Figur 1 dargestellten Vorrichtung erläutert werden sollen. Figur 1 zeigt eine Vorrichtung mit einer Reihe von Behältern, in denen pumpfähige Komponenten der Baustoffmischung bereitgestellt werden, sich an diese Behälter anschließenden Leitungssystemen mit Pumpvorrichtungen und Durchflussmesseinrichtungen sowie Mischeinrichtungen, die zu einem stufenweise durchgeführten Mischen der Komponenten dienen. Die Vorrichtung weist ferner eine Vorrichtung zum Einbringen der Baustoffmischung, **d. h.** eines Mörtelschaums, in den Ringspalt eines Tunnelbauwerks auf.

Zur Herstellung der in den Ringspalt einzubringenden Baustoffmischung wird zunächst in einem Behälter 10 eine Zementsuspension bereitgestellt. Die Zementsuspension besteht aus einem Zement der Zementart CEM III oder CEM IV, vorzugsweise einem Zementart CEM III/A, insbesondere einem Zement der Zementart CEM III/A mit der Festigkeitsklasse 52,5 und Wasser. Vorzugsweise wird als stabilisierender Zusatzstoff ein Bentonit in geringer Menge (weniger als 2 Gew.-%, insbesondere weniger als 1 Gew.-%) zugegeben. Ferner ist vorzugsweise ein Dispergiermittel in geringer Menge (weniger als 2 Gew.-%) enthalten. Es können auch Zuschlagstoffe, **z.B.** in Form von Gesteinsmehlen, zugegeben werden, wobei deren Anteil aus Gründen der zu erzielenden Festigkeit unter 20 Gew.-%, vorzugsweise unter 10 Gew.-%, liegen sollte. Bei einem bevorzugten Ausführungsbeispiel werden zur Herstellung eines Kubikmeters Zementsuspension 1190 kg Zement CEM III/A 52,2, beispielsweise "Dyckerhoff Variodur 40 (CEM III/A 52,5 R)" der Dyckerhoff GmbH, 595 kg Wasser, 4 kg aktiviertes Natriumbentonit "IBECO CT" der Imerys Industrial Minerals Greece **S.A.** und 8 kg Dispergiermittel "MC Montan Drive CA 02" der MC-Bauchemie Müller GmbH & Co. KG Chemische Fabriken gemischt. Das Anmischen der in dem Behälter 10 bereitgestellten Zementsuspension erfolgt vorzugsweise mittels eines Kolloid- oder auch Umwälzmischer. Der Wasser-Bindemittel-Wert oder Wasser-Zement-Wert (w/z-Wert) liegt im Bereich von 0,4 bis 0,6, so dass einerseits eine pumpfähige Konsistenz gewährleistet ist und andererseits keine übermäßigen Sedimentationserscheinungen auftreten.

Mit Hilfe eines Pumpsystems, das bei dem in Figur 1 dargestellten Ausführungsbeispiel eine mit Druckluft 12 beaufschlagte Transferpumpe 11 und eine Suspensionspumpe 13 umfasst, wird die Zementsuspension aus dem Behälter 10 über einen Durchflussmesser 14 und die Leitung 15 zu einer ersten Eintrittsöffnung eines Y-Stücks 16 herangeführt. Der andere Eintrittsöffnung des Y-Stücks 16 ist mit einer Leitung 23 verbunden, über die eine Tensidlösung aus einem Behälter 20 herangeführt wird. In die Tensid-Transportleitung 23 sind eine Pumpe 21 und ein zweiter Durchflussmesser 22 eingebunden. Die in dem Y-Stück 16 vereinten Volumenströme der Zementsuspension und der Tensidlösung werden durch einen Statikmischer oder Mischtopf 17 hindurchgeführt, um eine intensive Durchmischung zu gewährleisten. Um ein unkontrolliertes Vorschäumen der Zementsuspension zu verhindern, erfolgt eine volumengesteuerte Zugabe der Tensid-Lösung erst nach dem Anmischen der Zementsuspension. Hierbei erfolgt die volumengesteuerte Zugabe in den Förderstrom der Zementsuspension vorzugsweise mittels einer pulsationsarmen Pumpe unter Verwendung eines Düse und Rückschlagventil aufweisenden Y-Stücks 16.

Die Tensidlösung wird in einer Menge von vorzugsweise 10 Vol.-% bis 16 Vol.-%, bezogen auf die Zementsuspension, zugegeben. Bevorzugt ist die Zugabe von 100 1 Tensidlösung pro Kubikmeter Zementsuspension, wobei beispielsweise die Tensidlösung "Centripor SK 150 Konzentrat" der MC-Bauchemie Müller GmbH & Co. KG Chemische Fabriken eingesetzt werden kann.

Nach dem Vermischen von Tensidlösung und Zementsuspension gelangt die Mischung über die Leitung 18 zu der Eintrittsöffnung einer Begasungsstrecke eines Schaumgenerators 33. Über die Leitung 32 wird dem Schaumgenerator 33 Druckluft zugeführt. Der Volumenstrom der über den Anschluss 30 zugeführten Druckluft wird durch den Druckluftregler 31 eingestellt. Eine mit dem Durchflussmesser 14 und dem Durchflussmesser 22 sowie mit dem Druckluftregler 31 verbundene Steuereinrichtung sorgt dafür, dass ein vorgegebenes Volumenverhältnis von Zementsuspension, Tensidlösung und Druckluft eingehalten wird. Bei dem bevorzugten Ausführungsbeispiel verhalten sich die Volumenanteile der Zementsuspension Z zu den Volumenanteilen der Tensid-Lösung T und den Volumen der zugeführten Druckluft L wie Z:T:L = 10:1:20. Während die Tensid-Lösung mit einem Volumenanteil von 10% der Zementsuspension zugeführt wird, beträgt der Druckluftanteil etwa das Doppelte des Anteils der Zementsuspension. Zum Einstellen der Volumenströme dient eine Steuereinrichtung, die mit den Durchflussmessern 14 und 22 und mit den Pumpen 11, 13 und 21, der Druckmesseinrichtung 34 und dem Druckluft-Regler 31 gekoppelt ist, um die Pumpleistung und Druckluftzufuhr in Abhängigkeit von den gemessenen Durchflusswerten bzw. des Druckniveaus zu steuern.

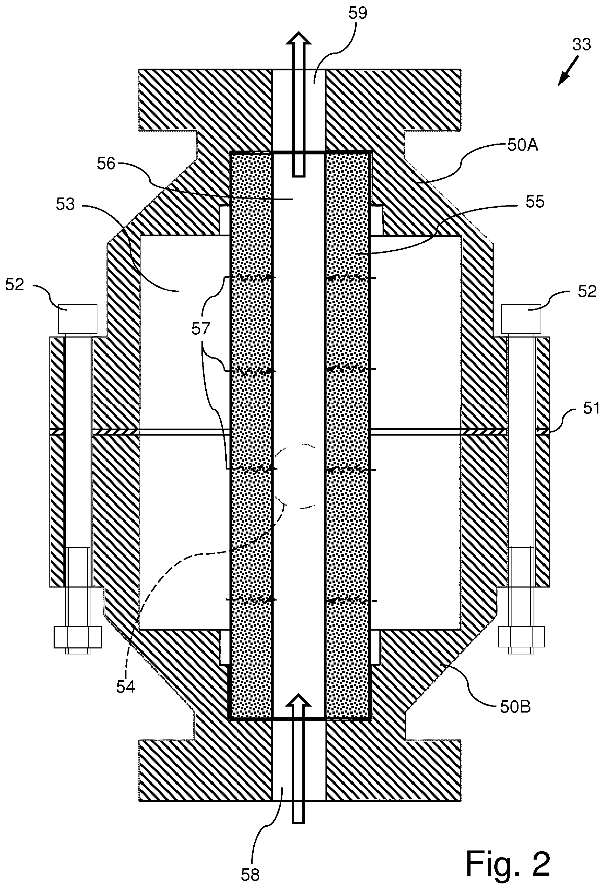

Figur 2 zeigt schematisch einige Details des Schaumgenerators 33. Der Schaumgenerator 33 enthält eine Begasungsstrecke in Form eines Hohlzylinders mit einer porösen Wandung 55, durch dessen Innenraum 56 die Zementsuspension hindurchgeleitet wird. Bei dem in Figur 2 veranschaulichten Ausführungsbeispiel ist der Hohlzylinder zwischen zwei Gehäusehälften 50A und 50B eingespannt. Die beiden Gehäusehälften 50A und 50B weisen an den Gehäuseenden dichtende Aufnahmen auf, die gegen die Stirnflächen des Hohlzylinders gepresst werden. An der Verbindungsfläche der beiden Gehäusehälften 50A und 50B ist eine Dichtung 51 vorgesehen. Durch Verbinden der beiden Gehäusehälften 50A und 50B mit den Schraubverbindungen 52 werden die Verbindungsfläche der beiden Gehäusehälften und zugleich die Stirnflächen des Hohlzylinders gegenüber den Gehäusehälften abgedichtet. Die Gehäusehälfte 50B weist eine mit dem zylindrischen Innenraum 56 des Hohlzylinders korrespondierende Eintrittsöffnung 58 und die Gehäusehälfte 50A eine mit dem zylindrischen Innenraum 56 korrespondierende Austrittsöffnung 59 auf. Im Inneren des Gehäuses ist der Hohlzylinder mit der porösen Wandung 55 von einer Druckluftkammer 53 umgeben, wobei die Druckluft durch eine in Figur 2 durch eine gestrichelte Linie angedeutete, in dieser Ansicht hinter dem Hohlzylinder angeordnete Einlassöffnung 54 zugeführt wird. Die Zementsuspension tritt durch die Eintrittsöffnung 58 in den Schaumgenerator und den Innenraum 56 des Hohlzylinders ein. Während sie durch den Innenraum 56 zur Austrittsöffnung 59 strömt, tritt die in die Druckluftkammer 53 eingebrachte Druckluft durch die Poren der porösen Wandung 55 hindurch in den Innenraum 56 ein. Dies ist durch die Pfeile 57 angedeutet. Die dabei an der Innenwand des Hohlzylinders kontinuierlich entstehenden Druckluftbläschen werden von der Strömung der Zementsuspension abgerissen und durchmischen sich mit der Zementsuspension, so dass einen Schaum-Volumenstrom gebildet wird, der dann durch die Austrittsöffnung 59 austritt. Die poröse Wandung 55 weist über die gesamte Länge des Hohlzylinders eine gleichförmige Porenstruktur auf und wird über die gesamte Länge der Begasungsstrecke mit näherungsweise dem gleichen Druck beaufschlagt, so dass an der Innenwand des Hohlzylinders im Innenraum 56 eine Vielzahl gleichförmiger Luftbläschen erzeugt werden. Dies führt zu einem Schaum mit einer gleichmäßigen Luftporenverteilung mit einer geringen Streuung der Luftporengröße. Zum Einbringen der Luft in den Strom der Zementsuspension innerhalb des Schaumgenerator 33 ist eine ausreichende Begasungsstrecke erforderlich, so dass sich eine gleichmäßige Porenstruktur aufbauen kann. Bei einer bevorzugten Ausführungsform weist der Hohlzylinder einen Außendurchmesser von 40 Millimeter und einen Innendurchmesser von 15 Millimeter sowie eine Länge von 159 Millimeter auf und besitzt er eine Porengröße von 50 bis 60 µm.

Es wird wieder auf Figur 1 Bezug genommen. Nach dem Einbringen der über die Leitung 32 dem Schaumgenerator 33 zugeführten Druckluft in die über die Leitung 18 zugeführte Mischung aus Zementsuspension und Tensidlösung verlässt ein Schaum-Volumenstrom die Austrittsöffnung 59 des Schaumgenerators 33 und gelangt über eine Druckmesseinrichtung 34 und eine Leitung 35 zu einer als Mischvorrichtung dienenden Spritzbeton-Ringdüse 36. Dieser Ringdüse 36 wird aus einem Vorratsbehälter 40 über eine Pumpe 41, einen Durchflussmesser 42 und eine Leitung 43 ein Erstarrungsbeschleuniger zugeführt. Der Durchflussmesser 42 und die Pumpe 41 sind mit derjenigen Steuereinrichtung gekoppelt, die mit der Pumpe 13 und dem Durchflussmesser 14 für die Zementsuspension, der Pumpe 21 und den Durchflussmesser 22 für die Tensid-Lösung und dem Druckluftregler 31 mit Druckmesseinrichtung gekoppelt ist. Dies gestattet eine volumengesteuerte Dosierung des Erstarrungsbeschleunigers. Als Erstarrungsbeschleuniger wird vorzugsweise ein Spritzbetonbeschleuniger auf der Basis einer Aluminiumhydroxid/Aluminiumsulfat-Lösung eingesetzt, beispielsweise der Spritzbetonbeschleuniger "Centrament Rapid 640" der MC-Bauchemie Müller GmbH & Co. KG Chemische Fabriken. Bei der bevorzugten Ausführungsform wird der Erstarrungsbeschleuniger in einer Menge zwischen 4 Vol.-% und 12 Vol.-%, vorzugsweise zwischen 7 Vol.-% und 9 Vol.-%, insbesondere in einer Menge von 8 Vol.-%, bezogen auf die Zementsuspension, zugegeben. Somit werden etwa 80 Liter Erstarrungsbeschleuniger pro Kubikmeter Zementsuspension zudosiert. Anstelle der zum Zumischen verwendeten Ringdüsen kann alternativ auch ein sogenannter Injektionsdeckel verwendet werden, welcher bei Zwei-Komponenten-Systemen zur Ringspaltverpressung verbreitet zum Einsatz kommt. Aufgrund der bei dieser Mischeinrichtung schlechteren Materialdurchmischung sollte der Beschleunigeranteil auf bis zu 16 Vol.-% erhöht werden. Die Mischung aus Zementsuspensionsschaum und Beschleuniger wird dann über eine Rohrleitung, insbesondere eine Lisene oder mehreren Lisenen dem Hohlraum, insbesondere dem Ringspalt, zugeführt.

Bei einer bevorzugten Ausführungsform der in Figur 1 dargestellten Vorrichtung sind die Pumpen 13, 21 und 41 pulsationsarme Pumpen, beispielsweise Exzenterschneckenpumpen, Schlauchpumpen oder Rotorpumpen. Die Durchflussmesser 14, 22 und 42 sind vorzugsweise elektronische Durchflussmesser zur Erfassung der jeweiligen Volumenströme. Die Dosierung der Druckluft im Druckluftregler 31 erfolgt zweckmäßiger Weise mittels eines elektronisches Massendurchflussreglers. Hierbei ist darauf zu achten, dass sich die oben genannten Mischungsverhältnisse (Volumenverhältnisse) auf Standardbedingungen (Temperatur T = 20 °C, Druck p = 1013 mbar) beziehen. Da insbesondere der Verpressdruck im Ringspalt in der Regel größer ist als der Druck der Standardbedingungen, ist es gegebenenfalls erforderlich, die Druckluftmenge aufgrund der Kompressibilität der gasförmigen Phase entsprechend anzupassen. Deshalb wird mit Hilfe des Sensors 34 der Druck möglichst nah am Einbringungsort, nämlich vorzugsweise in der Leitung 35, gemessen, da Rohrreibungsverluste aufgrund von Fließgrenze und Viskosität innerhalb der Förderstrecke sowie der Druck im zu verfüllenden Hohlraum Einfluss auf das Druckniveau haben.

Durch Zugabe des Erstarrungsbeschleunigers soll, wie bereits ausgeführt, ein "Einfrieren" eines überwiegend offenporigen Schaumzustands erreicht werden. Um dies zu erreichen, ist neben der im Schaumgenerator 33 erzeugten Schaumstruktur (Verhältnis des Luftvolumens zum Volumen der Zementsuspension, Luftporengröße und geringe Streuung der Luftporengrößen) auch der zeitliche Verlauf des Schaumzerfalls zu berücksichtigen. Nachdem der Schaum den Schaumgenerator 33 verlassen hat, gelangt er innerhalb weniger Sekunden zu der Mischeinrichtung in Form einer Ringdüse. Dort wird der Erstarrungsbeschleuniger zugemischt. Anschließend durchwandert die Mischung aus Erstarrungsbeschleuniger und Schaum die Rohrleitung (die Lisene), welche beispielsweise eine Länge von 3 m und einen Querschnitt von 20 cm² aufweist, bis zum Einbringungsort. Dafür benötigt der Schaum einen Zeitraum zwischen 10 und 20, beispielsweise 15 Sekunden. Während des Durchlaufens dieser Strecke erfolgt eine weitere Durchmischung von Erstarrungsbeschleuniger und Schaum. Zugleich werden die Erstarrungsreaktionen initiiert. Diese noch in den Rohrleitungen stattfindenden Prozesse sind bei der Verfahrensführung zu berücksichtigen. Nachdem der Baustoffschaum in den Hohlraum, d.h. den Ringspalt, eingebracht worden ist, setzt bei fortgesetztem Zerfall des Schaums einschließlich des zunehmenden Aufbrechens der Wände zwischen den Luftporen zugleich die Erstarrung ein. Bei den oben genannten Voraussetzungen der Verfahrensführung führt dies im Ergebnis zur einem erstarrten Schaum, der überwiegend offenporig und somit wasserdurchlässig bzw. drainagefähig ist.

Es wurden beispielsweise folgende Komponenten bereitgestellt und gemischt:

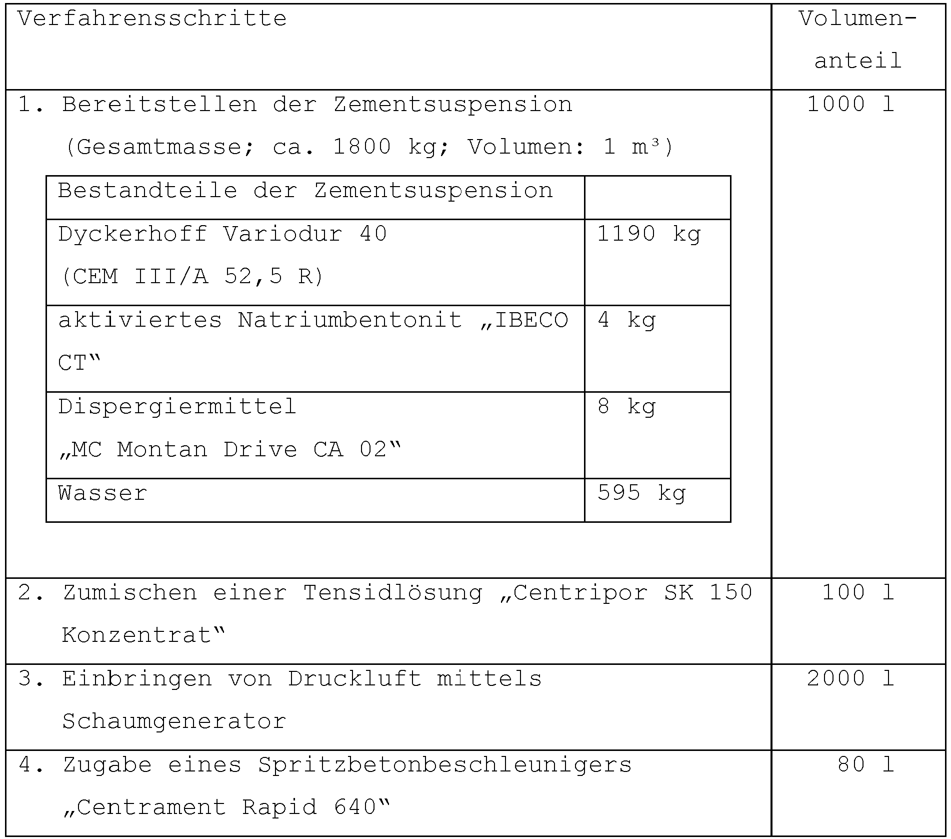

Dabei wurde ein Schaumgenerator mit einer Begasungsstrecke mit einer Länge von 159 mm, einem Außendurchmesser von 40 mm, einem Innendurchmesser von 15 mm und einer Porengröße von 50-60 µm verwendet. Der gebildete Schaum hatte eine Rohdichte von ca. 700 kg/m³.

Am erhärteten Mörtel wurde ein Wasserdurchlässigkeitsbeiwert gemäß DIN 18130 von kF = ca. 4 * 10⁻⁴ m/s, eine Festigkeit nach 3 Tagen von f_3d = ca. 0,4 MN/m² und eine Festigkeit nach 28 Tagen von f_28d = ca. 2 MN/m² gemessen.

Im Rahmen des Erfindungsgedankens sind zahlreiche alternative Ausführungsformen denkbar. Beispielsweise kann die Zementsuspension mehrere verschiedene Zemente oder Bindemittel enthalten und zusätzlich Zuschläge, soweit diese nicht die Festigkeit des erstarten Baustoffs, die Pumpbarkeit der Zementsuspension oder den gewünschten Teilzerfall des Schaums in unerwünschter Weise beeinträchtigen. Der Begriff der "Druckluft" soll selbstverständlich jegliche Luft oder ähnliche Gasgemische oder Gase, wie beispielsweise Stickstoff, bezeichnen, die in die Zementmischung "gedrückt" wird, um Schaumblasen oder -poren zu erzeugen, unabhängig vom konkreten Druck, der dabei aufgewendet wird und unabhängig von der genauen Zusammensetzung der Luft. Das Tensid ist vorzugsweise eine wässrige Lösung, die der fertigen Zementsuspension zugemischt wird. Selbstverständlich liegt es auch im Rahmen der Erfindung, wenn die Wasseranteile lediglich dadurch verändert werden, dass die Menge des Wassers der Zementsuspension um einen Anteil reduziert wird, der dann sogleich der Tensidlösung beigemischt wird, bevor dann die auf diese Weise verdünnte Tensidlösung der auf diese Weise verdickten Zementsuspension beigemischt wird und allein dadurch der Wasser-Bindemittel-Wert der noch tensidfreien Zementsuspension verringert wäre. Ähnliches gilt für den Fall, dass der Zementsuspension überdurchschnittlich schwere oder leichte Zuschlagstoffe in Mengen zugemischt würden, die zwar noch keinen wesentlichen Einfluss auf die Festigkeit der erhärteten Mörtelmischung und auch nicht auf das Schaumverhalten haben, aber zu erheblich abweichenden Dichten der Zementsuspension und somit auch des Schaumes führen würden. Anstelle der Zugabe einer Tensidlösung wäre es auch denkbar, dass Tensid in fester Form (Pulver, Granulat, **o.ä.)** der Zementsuspension zuzugeben, wobei in diesem Fall anstelle einer Steuerung der zugeführten Tensidmenge über deren Volumenstrom eine Dosierung über deren Masse oder Stoffmenge denkbar wäre. Anstelle der Zugabe eines Tensids können auch mehrere Tenside oder auch Tensidkomponenten, die erst nach ihrer Vermischung ein Tensid bilden, zugegeben werden, ohne den Rahmen der Erfindung zu verlassen. Das Gleiche gilt für die Zugabe des Erstarrungsbeschleunigers.

## Patentansprüche

1. Verfahren zum Herstellen einer drainagefähigen Mörtel-Füllung eines Hohlraums, insbesondere eines Ringspalts zwischen einem Baugrund und Tübbingen eines Tunnelbauwerks, wobei:
a) eine Zementsuspension mit einem Wasser-Bindemittel-Wert zwischen 0,40 und 0,60 durch Mischen wenigstens eines Zement-Bindemittels mit Wasser und gegebenenfalls Zuschlägen hergestellt und ein Zementsuspension-Volumenstrom erzeugt wird, wobei der Zementsuspension oder dem Zementsuspension-Volumenstrom ein Tensid zugemischt wird,
b) der Zementsuspension-Volumenstrom derart durch einen Schaumgenerator (33) zur Bildung eines Schaum-Volumenstroms geleitet wird, dass Druckluft in einem ersten vorgegebenen Volumenanteil zwischen 150 % und 250 % des Zementsuspension-Volumenstroms zugemischt wird und zu einem Schaum mit einer homogenen Luftporenverteilung mit einer geringen Streuung der Luftporengrößen, bei der die Luftporengrößen von mindestens 70 % des Druckluft-Volumenanteils von einer mittleren Luftporengröße um nicht mehr als etwa 50 % abweichen, führt, und
c) dem Schaum-Volumenstrom bei seiner Einbringung in den Hohlraum ein Erstarrungsbeschleuniger zugemischt wird.

2. Verfahren zum Herstellen einer drainagefähigen Mörtel-Füllung eines Hohlraums nach Anspruch 1, , **dadurch gekennzeichnet, dass** im Schritt a) ein Zementsuspension-Volumenstrom mit einer Dichte zwischen 1500 kg/m³ und 2000 kg/m³, vorzugsweise zwischen 1700 kg/m³ und 1900 kg/m³, erzeugt wird und die Druckluft im Schritt b) in dem ersten vorgegebenen Volumenanteil derart zugemischt wird, dass ein Schaum-Volumenstrom mit einer Dichte zwischen 600 kg/m³ und 800 kg/m³, vorzugsweise zwischen 650 kg/m³ und 750 kg/m³, gebildet wird.

3. Verfahren zum Herstellen einer drainagefähigen Mörtel-Füllung eines Hohlraums nach Anspruch 1 oder 2, **dadurch gekennzeichnet, dass** im Schritt b) die Druckluft bei einer Luftporengrößenverteilung zugemischt wird, bei der die mittlere Luftporengröße im Bereich zwischen 200 µm und 1300 µm, vorzugsweise zwischen 250 µm und 800 µm, insbesondere zwischen 300 µm und 500 µm, liegt.

4. Verfahren zum Herstellen einer drainagefähigen Mörtel-Füllung eines Hohlraums nach einem der Ansprüche 1 - 3, **dadurch gekennzeichnet, dass** im Schritt b) der Zementsuspension-Volumenstrom durch eine eine poröse Wandung (55) aufweisende rohrförmige Begasungsstrecke des Schaumgenerators (33) geleitet wird, wobei Druckluft aus einer Druckluftkammer (53) durch die poröse Wandung (55) der Begasungsstrecke hindurch in einen den Zementsuspension-Volumenstrom führenden Innenraum (56) gepresst wird, wobei die Porengröße der porösen Wandung (55) so gewählt wird, dass die gewünschte Luftporengrößenverteilung im Schaum-Volumenstrom erreicht wird.

5. Verfahren zum Herstellen einer drainagefähigen Mörtel-Füllung eines Hohlraums nach einem der Ansprüche 1 - 4, **dadurch gekennzeichnet, dass** die Zementsuspension im Schritt a) durch Mischen wenigstens eines Zements der Zementart CEM III oder CEM IV, vorzugsweise der Zementart CEM III, mit Wasser hergestellt wird, wobei geringe Mengen eines Tonerde-Schichtsilikats, vorzugsweise eines Bentonits, als Stabilisierer und/oder geringe Mengen eines Dispergiermittels zugemischt werden, wobei die geringen Mengen jeweils weniger als 2 Gew.-% der Zementsuspension betragen.

6. Verfahren zum Herstellen einer drainagefähigen Mörtel-Füllung eines Hohlraums nach einem der Ansprüche 1 - 5, **dadurch gekennzeichnet, dass** im Schritt a) zunächst der Zementsuspension-Volumenstrom erzeugt und dann dem Zementsuspension-Volumenstrom das Tensid in Form einer Tensidlösung in einem zweiten vorgegebenen Volumenanteil von maximal 20 %, vorzugsweise zwischen 5 und 15 %, des Zementsuspension-Volumenstroms zugemischt wird.

7. Verfahren zum Herstellen einer drainagefähigen Mörtel-Füllung eines Hohlraums nach Anspruch 6, **dadurch gekennzeichnet, dass** eine wenigstens ein anionisches Tensid und/oder wenigstens einen Proteinschäumer enthaltende Tensidlösung zugemischt wird.

8. Verfahren zum Herstellen einer drainagefähigen Mörtel-Füllung eines Hohlraums nach einem der Ansprüche 1 - 7, **dadurch gekennzeichnet, dass** im Schritt c) dem Schaum-Volumenstrom ein alkali- und erdalkalifreier Erstarrungsbeschleuniger in einem dritten vorgegebenen Volumenanteil zwischen 4 % und 16 %, vorzugsweise zwischen 7 % und 10 %, des Zementsuspension-Volumenstroms zugemischt wird.

9. Verfahren zum Herstellen einer drainagefähigen Mörtel-Füllung eines Hohlraums nach einem der Ansprüche 1 - 8, **dadurch gekennzeichnet, dass** im Schritt c) dem Schaum-Volumenstrom als Erstarrungsbeschleuniger eine wässrige Lösung von mindestens 50 Gew.-% Aluminiumhydroxid und/oder Aluminiumsulfat zugemischt wird.

10. Verfahren zum Herstellen einer drainagefähigen Mörtel-Füllung eines Hohlraums nach einem der Ansprüche 1 - 8, **dadurch gekennzeichnet, dass** im Schritt c) der Erstarrungsbeschleuniger dem Schaum-Volumenstrom maximal 20 Sekunden, vorzugsweise maximal 15 Sekunden, vor seiner Einbringung in den Hohlraum zugemischt wird.

11. Vorrichtung zum Herstellen einer Mörtel-Füllung eines Hohlraums zur Durchführung eines Verfahrens nach einem der Ansprüche 1 - 10, aufweisend:
eine Vorrichtung (10 - 15) zum Erzeugen eines Zementsuspension-Volumenstroms,
eine Vorrichtung (16, 17, 20 - 23) zum Zumischen eines Tensids zu dem Zementsuspension-Volumenstrom,
einen Schaumgenerator (33) mit einer eine poröse Wandung (55) aufweisenden rohrförmigen Begasungsstrecke, durch die der Zementsuspension-Volumenstrom hindurchgeführt werden kann, wobei an der Außenseite der porösen Wandung (55) eine Druckluftkammer (53) derart angeordnet ist, dass Druckluft aus der Druckluftkammer (53) durch die poröse Wandung (55) über die gesamte Länge der Begasungsstrecke hindurch mit näherungsweise dem gleichen Druck in den Zementsuspension-Volumenstrom gepresst werden kann, so dass ein Schaum-Volumenstrom erzeugt werden kann, wobei die poröse Wandung (55) über die gesamte Länge der Begasungsstrecke eine gleichförmige Porenstruktur aufweist, so dass die Zumischung der Druckluft zu einem Schaum mit einer homogenen Luftporenverteilung mit einer geringen Streuung der Luftporengrößen, bei der die Luftporengrößen von mindestens 70 % des Druckluft-Volumenanteils von einer mittleren Luftporengröße um nicht mehr als etwa 50 % abweichen, führen kann,
einen mit einem Drucklufteinlass (32) der Druckluftkammer verbundenen Volumenstrom-Regler (31) zum Einstellen eines Druckluft-Volumenstroms,
eine mit dem Volumenstrom-Regler (31) gekoppelte Steuereinrichtung, die derart konfiguriert ist, dass ein Druckluft-Volumenstrom eingestellt wird, der etwa dem 1,5-fachen bis 2,5-fachen des Zementsuspension-Volumenstroms entspricht, und
eine dem Schaumgenerator (33) nachgeschaltete Vorrichtung (36, 40 - 43) zum Zumischen eines Erstarrungsbeschleunigers zu dem Schaum-Volumenstrom, die mit einer Leitung zum Einbringen der in der Vorrichtung (36, 40 - 43) zum Zumischen des Erstarrungsbeschleunigers gebildeten Mischung in den Hohlraum verbunden ist.

12. Vorrichtung nach Anspruch 11, **dadurch gekennzeichnet, dass** die Vorrichtung (10 - 15) zum Erzeugen eines Zementsuspension-Volumenstroms eine erste Pumpvorrichtung (13) und eine mit der Steuereinrichtung gekoppelte erste Durchflussmessvorrichtung (14) zum Erfassen des Zementsuspension-Volumenstroms aufweist.

13. Vorrichtung nach Anspruch 12, **dadurch gekennzeichnet, dass** die Vorrichtung (16, 17, 20 - 23) zum Zumischen eines Tensids eine Leitung zum Weiterleiten des Zementsuspension-Volumenstroms, einen in die Leitung eingebundenen Mischer (17) und einen stromauf des Mischers in die Leitung einmündenden Leitungszweig (23) zum Heranführen eines Tensid-Volumenstroms aufweist, wobei der Leitungszweig (23) zum Heranführen des Tensid-Volumenstroms eine zweite Pumpvorrichtung (21) und eine zweite Durchflussmessvorrichtung (22) zum Erfassen des Tensid-Volumenstroms aufweist, wobei die zweite Pumpvorrichtung (21) und die zweite Durchflussmessvorrichtung (22) mit der Steuereinrichtung gekoppelt sind.

14. Vorrichtung nach einem der Ansprüche 11 -13, **dadurch gekennzeichnet, dass** die rohrförmige Begasungsstrecke ein von der porösen Wandung (55) umgebener zylindrischer Rohrabschnitt mit einem Innendurchmesser zwischen 10 mm und 20 mm und einer Länge zwischen 100 mm und 300 mm ist, wobei die Poren der porösen Wandung (55) einen näherungsweise gleichen Durchmesser aufweisen.

15. Vorrichtung nach Anspruch 14, **dadurch gekennzeichnet, dass** der Durchmesser der Poren der porösen Wandung (55) zwischen 30 µm und 100 µm, vorzugsweise zwischen 50 µm und 60 µm, liegt.

16. Vorrichtung nach einem der Ansprüche 11 -15, **dadurch gekennzeichnet, dass** die Vorrichtung (36, 40 - 43) zum Zumischen eines Erstarrungsbeschleunigers eine Leitung zum Weiterleiten des Schaum-Volumenstroms, einen in diese Leitung einmündenden Leitungszweig (43) zum Heranführen eines Erstarrungsbeschleuniger-Volumenstroms aufweist, wobei der Leitungszweig (43) zum Heranführen des Erstarrungsbeschleuniger-Volumenstroms eine dritte Pumpvorrichtung (41) und eine dritte Durchflussmessvorrichtung (42) aufweist, wobei die dritte Pumpvorrichtung (41) und die dritte Durchflussmessvorrichtung (42) mit der Steuereinrichtung gekoppelt sind.

17. Vorrichtung nach Anspruch 16, **dadurch gekennzeichnet, dass** die Vorrichtung (36, 40 - 43) zum Zumischen des Erstarrungsbeschleunigers eine die Leitung zum Weiterleiten des Schaum-Volumenstroms umgebende Ringdüse aufweist, wobei der Leitungszweig (43) zum Heranführen des Erstarrungsbeschleuniger-Volumenstroms in die Ringdüse einmündet.

18. Vorrichtung nach einem der Ansprüche 11 - 17, zum Herstellen einer Mörtel-Füllung eines Ringspalts zwischen einem Baugrund und Tübbingen eines Tunnelbauwerks, **dadurch gekennzeichnet, dass** die Leitung zum Einbringen der in der Mischvorrichtung gebildeten Mischung in den Hohlraum eine Lisene zum Einbringen der Mischung in den Ringspalt ist.

## Claims

1. A method for producing a drainable mortar filling of a cavity, in particular of an annular gap between a subsoil and tunnel lining segments of a tunnel structure, wherein:
a) a cement suspension having a water-to-binder ratio between 0.40 and 0.60 is prepared by mixing at least one cement binder with water and optionally aggregates, and a cement suspension volume flow is generated, wherein a surfactant is admixed to the cement suspension or to the cement suspension volume flow,
b) the cement suspension volume flow is passed through a foam generator (33) for forming a foam volume flow such that compressed air is admixed in a first predetermined volume proportion of between 150% and 250% of the cement suspension volume flow and leads to a foam having a homogeneous air pore distribution with a low dispersion of the air pore sizes, in which the air pore sizes of at least 70% of the compressed air volume proportion deviate from a mean air pore size by not more than approximately 50%, and
c) a setting accelerator is admixed to the foam volume flow upon its introduction into the cavity.

2. The method for producing a drainable mortar filling of a cavity according to claim 1, **characterised in that** in step a) a cement suspension volume flow having a density between 1500 kg/m³ and 2000 kg/m³, preferably between 1700 kg/m³ and 1900 kg/m³, is generated, and the compressed air in step b) is admixed in the first predetermined volume proportion such that a foam volume flow having a density between 600 kg/m³ and 800 kg/m³, preferably between 650 kg/m³ and 750 kg/m³, is formed.

3. The method for producing a drainable mortar filling of a cavity according to claim 1 or 2, **characterised in that** in step b) the compressed air is admixed with an air pore size distribution in which the mean air pore size is in the range between 200 µm and 1300 µm, preferably between 250 µm and 800 µm, in particular between 300 µm and 500 µm.

4. The method for producing a drainable mortar filling of a cavity according to any one of claims 1 to 3, **characterised in that** in step b) the cement suspension volume flow is passed through a tubular gasification section of the foam generator (33) having a porous wall (55), wherein compressed air from a compressed air chamber (53) is pressed through the porous wall (55) of the gasification section into an interior space (56) conducting the cement suspension volume flow, wherein the pore size of the porous wall (55) is selected such that the desired air pore size distribution in the foam volume flow is achieved.

5. The method for producing a drainable mortar filling of a cavity according to any one of claims 1 to 4, **characterised in that** the cement suspension in step a) is prepared by mixing at least one cement of cement type CEM III or CEM IV, preferably of cement type CEM III, with water, wherein small amounts of a clay layer silicate, preferably a bentonite, as a stabiliser and/or small amounts of a dispersing agent are admixed, wherein the small amounts each constitute less than 2% by weight of the cement suspension.

6. The method for producing a drainable mortar filling of a cavity according to any one of claims 1 to 5, **characterised in that** in step a) first the cement suspension volume flow is generated and then the surfactant in the form of a surfactant solution is admixed to the cement suspension volume flow in a second predetermined volume proportion of at most 20%, preferably between 5 and 15%, of the cement suspension volume flow.

7. The method for producing a drainable mortar filling of a cavity according to claim 6, **characterised in that** a surfactant solution containing at least one anionic surfactant and/or at least one protein foaming agent is admixed.

8. The method for producing a drainable mortar filling of a cavity according to any one of claims 1 to 7, **characterised in that** in step c) an alkali-free and alkaline earth-free setting accelerator is admixed to the foam volume flow in a third predetermined volume proportion of between 4% and 16%, preferably between 7% and 10%, of the cement suspension volume flow.

9. The method for producing a drainable mortar filling of a cavity according to any one of claims 1 to 8, **characterised in that** in step c) an aqueous solution of at least 50% by weight of aluminium hydroxide and/or aluminium sulphate is admixed to the foam volume flow as a setting accelerator.

10. The method for producing a drainable mortar filling of a cavity according to any one of claims 1 to 8, **characterised in that** in step c) the setting accelerator is admixed to the foam volume flow at most 20 seconds, preferably at most 15 seconds, before its introduction into the cavity.

11. An apparatus for producing a mortar filling of a cavity for carrying out a method according to any one of claims 1 to 10, comprising:
a device (10 - 15) for generating a cement suspension volume flow,
a device (16, 17, 20 - 23) for admixing a surfactant to the cement suspension volume flow,
a foam generator (33) having a tubular aeration section with a porous wall (55) through which the cement suspension volume flow can be passed, wherein a compressed air chamber (53) is arranged on the outside of the porous wall (55) such that compressed air from the compressed air chamber (53) can be pressed through the porous wall (55) over the entire length of the gasification section at approximately the same pressure into the cement suspension volume flow, so that a foam volume flow can be generated, wherein the porous wall (55) has a uniform pore structure over the entire length of the gasification section, so that the admixture of the compressed air can lead to a foam having a homogeneous air pore distribution with a low dispersion of the air pore sizes, in which the air pore sizes of at least 70% of the compressed air volume proportion deviate from a mean air pore size by not more than approximately 50%,
a volume flow regulator (31) connected to a compressed air inlet (32) of the compressed air chamber for adjusting a compressed air volume flow,
a control device coupled to the volume flow regulator (31), configured such that a compressed air volume flow is set which corresponds to approximately 1.5 times to 2.5 times the cement suspension volume flow, and
a device (36, 40 - 43) arranged downstream of the foam generator (33) for admixing a setting accelerator to the foam volume flow, the device being connected to a line for introducing the mixture formed in the device (36, 40 - 43) for admixing the setting accelerator into the cavity.

12. The apparatus according to claim 11, **characterised in that** the device (10 - 15) for generating a cement suspension volume flow comprises a first pumping device (13) and a first flow measurement device (14) coupled to the control device for detecting the cement suspension volume flow.

13. The apparatus according to claim 12, **characterised in that** the device (16, 17, 20 - 23) for admixing a surfactant comprises a line for forwarding the cement suspension volume flow, a mixer (17) integrated into the line, and a line branch (23) opening into the line upstream of the mixer for supplying a surfactant volume flow, wherein the line branch (23) for supplying the surfactant volume flow comprises a second pumping device (21) and a second flow measurement device (22) for detecting the surfactant volume flow, wherein the second pumping device (21) and the second flow measurement device (22) are coupled to the control device.

14. The apparatus according to any one of claims 11 to 13, **characterised in that** the tubular gasification section is a cylindrical pipe section surrounded by the porous wall (55) having an inner diameter between 10 mm and 20 mm and a length between 100 mm and 300 mm, wherein the pores of the porous wall (55) have an approximately equal diameter.

15. The apparatus according to claim 14, **characterised in that** the diameter of the pores of the porous wall (55) is between 30 µm and 100 µm, preferably between 50 µm and 60 µm.

16. The apparatus according to any one of claims 11 to 15, **characterised in that** the device (36, 40 - 43) for admixing a setting accelerator comprises a line for forwarding the foam volume flow, a line branch (43) opening into this line for supplying a setting accelerator volume flow, wherein the line branch (43) for supplying the setting accelerator volume flow comprises a third pumping device (41) and a third flow measurement device (42), wherein the third pumping device (41) and the third flow measurement device (42) are coupled to the control device.

17. The apparatus according to claim 16, **characterised in that** the device (36, 40 - 43) for admixing the setting accelerator comprises an annular nozzle surrounding the line for forwarding the foam volume flow, wherein the line branch (43) for supplying the setting accelerator volume flow opens into the annular nozzle.

18. The apparatus according to any one of claims 11 to 17, for producing a mortar filling of an annular gap between a subsoil and tunnel lining segments of a tunnel structure, **characterised in that** the line for introducing the mixture formed in the mixing device into the cavity is a grout tube for introducing the mixture into the annular gap.

## Revendications

1. Procédé pour produire un remplissage de mortier drainant d'une cavité, en particulier d'un espace annulaire entre un sol de fondation et des voussoirs d'un ouvrage de tunnel, dans lequel :
a) une suspension de ciment présentant un rapport eau/liant compris entre 0,40 et 0,60 est préparée par mélange d'au moins un liant cimentaire avec de l'eau et éventuellement des granulats, et un flux volumique de suspension de ciment est généré, un tensioactif étant ajouté par mélange à la suspension de ciment ou au flux volumique de suspension de ciment,
b) le flux volumique de suspension de ciment est conduit à travers un générateur de mousse (33) pour former un flux volumique de mousse de telle sorte que de l'air comprimé soit ajouté par mélange dans une première proportion volumique prédéterminée comprise entre 150 % et 250 % du flux volumique de suspension de ciment et conduise à une mousse présentant une distribution homogène des pores d'air avec une faible dispersion des tailles de pores d'air, dans laquelle les tailles de pores d'air d'au moins 70 % de la proportion volumique d'air comprimé s'écartent d'une taille moyenne de pore d'air de pas plus d'environ 50 %, et
c) un accélérateur de prise est ajouté par mélange au flux volumique de mousse lors de son introduction dans la cavité.

2. Procédé pour produire un remplissage de mortier drainant d'une cavité selon la revendication 1, **caractérisé en ce que** dans l'étape a) un flux volumique de suspension de ciment présentant une masse volumique comprise entre 1500 kg/m³ et 2000 kg/m³, de préférence entre 1700 kg/m³ et 1900 kg/m³, est généré, et l'air comprimé dans l'étape b) est ajouté par mélange dans la première proportion volumique prédéterminée de telle sorte qu'un flux volumique de mousse présentant une masse volumique comprise entre 600 kg/m³ et 800 kg/m³, de préférence entre 650 kg/m³ et 750 kg/m³, soit formé.

3. Procédé pour produire un remplissage de mortier drainant d'une cavité selon la revendication 1 ou 2, **caractérisé en ce que** dans l'étape b) l'air comprimé est ajouté par mélange avec une distribution des tailles de pores d'air dans laquelle la taille moyenne de pore d'air se situe dans la plage comprise entre 200 µm et 1300 µm, de préférence entre 250 µm et 800 µm, en particulier entre 300 µm et 500 µm.

4. Procédé pour produire un remplissage de mortier drainant d'une cavité selon l'une quelconque des revendications 1 à 3, **caractérisé en ce que** dans l'étape b) le flux volumique de suspension de ciment est conduit à travers une section d'aération tubulaire du générateur de mousse (33) présentant une paroi poreuse (55), l'air comprimé provenant d'une chambre d'air comprimé (53) étant pressé à travers la paroi poreuse (55) de la section d'aération dans un espace intérieur (56) conduisant le flux volumique de suspension de ciment, la taille des pores de la paroi poreuse (55) étant choisie de telle sorte que la distribution désirée des tailles de pores d'air dans le flux volumique de mousse soit obtenue.

5. Procédé pour produire un remplissage de mortier drainant d'une cavité selon l'une quelconque des revendications 1 à 4, **caractérisé en ce que** la suspension de ciment dans l'étape a) est préparée par mélange d'au moins un ciment du type de ciment CEM III ou CEM IV, de préférence du type de ciment CEM III, avec de l'eau, de faibles quantités d'un phyllosilicate d'alumine, de préférence d'une bentonite, en tant que stabilisant et/ou de faibles quantités d'un agent dispersant étant ajoutées par mélange, les faibles quantités représentant chacune moins de 2 % en masse de la suspension de ciment.

6. Procédé pour produire un remplissage de mortier drainant d'une cavité selon l'une quelconque des revendications 1 à 5, **caractérisé en ce que** dans l'étape a) le flux volumique de suspension de ciment est d'abord généré, puis le tensioactif sous forme d'une solution de tensioactif est ajouté par mélange au flux volumique de suspension de ciment dans une deuxième proportion volumique prédéterminée d'au plus 20 %, de préférence comprise entre 5 et 15 %, du flux volumique de suspension de ciment.

7. Procédé pour produire un remplissage de mortier drainant d'une cavité selon la revendication 6, **caractérisé en ce qu'**une solution de tensioactif contenant au moins un tensioactif anionique et/ou au moins un agent moussant protéique est ajoutée par mélange.

8. Procédé pour produire un remplissage de mortier drainant d'une cavité selon l'une quelconque des revendications 1 à 7, **caractérisé en ce que** dans l'étape c) un accélérateur de prise exempt d'alcalins et d'alcalino-terreux est ajouté par mélange au flux volumique de mousse dans une troisième proportion volumique prédéterminée comprise entre 4 % et 16 %, de préférence entre 7 % et 10 %, du flux volumique de suspension de ciment.

9. Procédé pour produire un remplissage de mortier drainant d'une cavité selon l'une quelconque des revendications 1 à 8, **caractérisé en ce que** dans l'étape c) une solution aqueuse d'au moins 50 % en masse d'hydroxyde d'aluminium et/ou de sulfate d'aluminium est ajoutée par mélange au flux volumique de mousse en tant qu'accélérateur de prise.

10. Procédé pour produire un remplissage de mortier drainant d'une cavité selon l'une quelconque des revendications 1 à 8, **caractérisé en ce que** dans l'étape c) l'accélérateur de prise est ajouté par mélange au flux volumique de mousse au plus 20 secondes, de préférence au plus 15 secondes, avant son introduction dans la cavité.

11. Dispositif pour produire un remplissage de mortier d'une cavité pour la mise en œuvre d'un procédé selon l'une quelconque des revendications 1 à 10, comprenant :
un dispositif (10-15) pour générer un flux volumique de suspension de ciment,
un dispositif (16, 17, 20-23) pour ajouter par mélange un tensioactif au flux volumique de suspension de ciment,
un générateur de mousse (33) comportant une section d'aération tubulaire présentant une paroi poreuse (55) à travers laquelle le flux volumique de suspension de ciment peut être conduit, une chambre d'air comprimé (53) étant disposée sur le côté extérieur de la paroi poreuse (55) de telle sorte que de l'air comprimé provenant de la chambre d'air comprimé (53) puisse être pressé à travers la paroi poreuse (55) sur toute la longueur de la section d'aération à une pression approximativement identique dans le flux volumique de suspension de ciment, de sorte qu'un flux volumique de mousse puisse être généré, la paroi poreuse (55) présentant une structure de pores uniforme sur toute la longueur de la section d'aération, de sorte que l'addition par mélange de l'air comprimé puisse conduire à une mousse présentant une distribution homogène des pores d'air avec une faible dispersion des tailles de pores d'air, dans laquelle les tailles de pores d'air d'au moins 70 % de la proportion volumique d'air comprimé s'écartent d'une taille moyenne de pore d'air de pas plus d'environ 50 %, un régulateur de flux volumique (31) relié à une entrée d'air comprimé (32) de la chambre d'air comprimé pour régler un flux volumique d'air comprimé, un dispositif de commande couplé au régulateur de flux volumique (31), configuré de telle sorte qu'un flux volumique d'air comprimé soit réglé qui correspond à environ 1,5 fois à 2,5 fois le flux volumique de suspension de ciment, et un dispositif (36, 40-43) disposé en aval du générateur de mousse (33) pour ajouter par mélange un accélérateur de prise au flux volumique de mousse, qui est relié à une conduite pour introduire le mélange formé dans le dispositif (36, 40-43) pour ajouter par mélange l'accélérateur de prise dans la cavité.

12. Dispositif selon la revendication 11, **caractérisé en ce que** le dispositif (10-15) pour générer un flux volumique de suspension de ciment comprend un premier dispositif de pompage (13) et un premier dispositif de mesure de débit (14) couplé au dispositif de commande pour détecter le flux volumique de suspension de ciment.

13. Dispositif selon la revendication 12, **caractérisé en ce que** le dispositif (16, 17, 20-23) pour ajouter par mélange un tensioactif comprend une conduite pour acheminer le flux volumique de suspension de ciment, un mélangeur (17) intégré dans la conduite et une branche de conduite (23) débouchant dans la conduite en amont du mélangeur pour amener un flux volumique de tensioactif, la branche de conduite (23) pour amener le flux volumique de tensioactif comprenant un deuxième dispositif de pompage (21) et un deuxième dispositif de mesure de débit (22) pour détecter le flux volumique de tensioactif, le deuxième dispositif de pompage (21) et le deuxième dispositif de mesure de débit (22) étant couplés au dispositif de commande.

14. Dispositif selon l'une quelconque des revendications 11 à 13, **caractérisé en ce que** la section d'aération tubulaire est une section de tube cylindrique entourée par la paroi poreuse (55) présentant un diamètre intérieur compris entre 10 mm et 20 mm et une longueur comprise entre 100 mm et 300 mm, les pores de la paroi poreuse (55) présentant un diamètre approximativement identique.

15. Dispositif selon la revendication 14, **caractérisé en ce que** le diamètre des pores de la paroi poreuse (55) est compris entre 30 µm et 100 µm, de préférence entre 50 µm et 60 µm.

16. Dispositif selon l'une quelconque des revendications 11 à 15, **caractérisé en ce que** le dispositif (36, 40-43) pour ajouter par mélange un accélérateur de prise comprend une conduite pour acheminer le flux volumique de mousse, une branche de conduite (43) débouchant dans cette conduite pour amener un flux volumique d'accélérateur de prise, la branche de conduite (43) pour amener le flux volumique d'accélérateur de prise comprenant un troisième dispositif de pompage (41) et un troisième dispositif de mesure de débit (42), le troisième dispositif de pompage (41) et le troisième dispositif de mesure de débit (42) étant couplés au dispositif de commande.

17. Dispositif selon la revendication 16, **caractérisé en ce que** le dispositif (36, 40-43) pour ajouter par mélange l'accélérateur de prise comprend une buse annulaire entourant la conduite pour acheminer le flux volumique de mousse, la branche de conduite (43) pour amener le flux volumique d'accélérateur de prise débouchant dans la buse annulaire.

18. Dispositif selon l'une quelconque des revendications 11 à 17, pour produire un remplissage de mortier d'un espace annulaire entre un sol de fondation et des voussoirs d'un ouvrage de tunnel, **caractérisé en ce que** la conduite pour introduire le mélange formé dans le dispositif de mélange dans la cavité est un tube d'injection pour introduire le mélange dans l'espace annulaire.
